# EUROPEAN PATENT APPLICATION

(11) **EP 4 517 967 A2**
(43) Date of publication of application: **05.03.2025**
(21) Application number: 24197881.6
(22) Date of filing: 02.09.2024
(51) Int. Cl.: H01M 50/213, H01M 50/507, H01M 50/516, H01M 50/559

(54) **BATTERY MODULE**

(30) Priority: 04.09.2023 KR 20230117102
(71) Applicant: SAMSUNG SDI CO., LTD., Giheung-gu Yongin-si, Gyeonggi-do 17084 (KR)
(72) Inventor: Kang, Il Oh, 17084 Yongin-si, Gyeonggi-do (KR)
(74) Representative: Gulde & Partner

(57) **Abstract**

A battery module is provided including a plurality of battery cells arranged in a first row and a second row parallel to the first row; a holder for receiving the plurality of battery cells; and a tab member disposed on the holder, positioned relative to the first and the second rows and welded to respective electrode terminals of plurality of the battery cells, wherein the tab member includes a body portion disposed between the first row and the second row, a first neck portion connected to the body portion, disposed along the first row, and connected to electrode terminals of one or more battery cells arranged in the first row with a first tab, and a second neck portion connected to the body portion, disposed along the second row, and connected to electrode terminals of one or more battery cells arranged in the second row with a second tab.

## Description

### FIELD

The present disclosure relates to a battery module. More particularly, the present disclosure relates to a battery module for minimizing a voltage difference between cells.

### BACKGROUND

A rechargeable battery is a battery that is capable of being repeatedly charged and discharged, unlike a primary cell. Small rechargeable batteries may be used for small portable electronic devices such as mobile phones, laptop computers, or camcorders. Large capacity and high density rechargeable batteries may be used to store motor driving power or energy for hybrid vehicles and/or electric vehicles.

### SUMMARY

The present disclosure provides a battery module for minimizing a voltage difference between battery cells sharing tab members.

An embodiment of the present disclosure provides a battery module comprising: a plurality of battery cells disposed in a first row and a second row parallel to the first row; a holder for receiving the plurality of battery cells; and a tab member disposed on the holder, positioned relative to the first row and the second row and welded to respective electrode terminals of the plurality of battery cells, wherein the tab member comprises a body portion disposed between the first row and the second row, a first neck portion connected to the body portion, disposed along the first row, and connected to electrode terminals of one or more battery cells of the plurality of battery cells arranged in the first row with a first tab, and a second neck portion connected to the body portion, disposed along the second row, and connected to electrode terminals of one or more battery cells of the plurality of battery cells arranged in the second row with a second tab.

The first tab of the first neck portion may have a pair of electrically connected first tabs, and each tab of the pair of first tabs may be welded to respective electrode terminals of two battery cells of the plurality of battery cells, the two battery cells being disposed in the first row and may be electrically connected to each other.

The first neck portion may be disposed around the two battery cells disposed in the first row and may be disposed between the two battery cells in the first row, and the pair of electrically connected first tabs may be disposed around the two battery cells disposed in the first row.

The second tab of the second neck portion may comprise a pair of electrically connected second tabs, and each tab of the pair of electrically connected second tabs may be welded to electrode terminals of the two battery cells which are disposed in the second row and may be electrically connected to each other.

The second neck portion may be disposed around the two battery cells disposed in the second row and may be disposed between the two battery cells in the second row, and the pair of electrically connected second tabs are disposed around the two battery cells disposed in the second row direction.

Each of the plurality of battery cells may be a cylindrical battery, an axial-direction center of the one or more battery cells arranged in the first row and an axial-direction center of the one or more battery cells arranged in the second row may be offset from each other in a direction along the second row such that a line passing through the axial-direction centers of a battery cell disposed at an end of the first row and a battery cell disposed at an end of the second row has angle relative to a direction in which the second row is disposed that is other than 90 degrees.

The tab member may include a bent portion being bent downwards relative to a plane of the body portion of the tab member and along a direction parallel to the line passing through the axial direction centers of the battery cell disposed at the end of the first row and the battery cell disposed at the end of the second row, the bent portion may be connected to an end of the body portion of the tab member, and formed to have a cross-section that is downward convex relative to the plane of the body portion.

The bent portion may have a curvature radius, and an upper-end bending start point of the curvature radius may be disposed on a diagonal upper portion of a round portion formed on a respective end of a battery cell of the plurality of batter cells in the axial direction.

The bent portion may have a curvature radius, and an upper-end bending start point of the curvature radius may be disposed on an upper portion of a round portion formed on a respective end of a battery cell of the plurality of battery cells in the axial direction.

The bent portion may further include a lateral convex surface that is convex toward a lateral surface of a battery cell of the plurality of battery cells.

The bent portion may be formed to have a curved cross-section that is downward convex on a lateral surface of a battery cell of the plurality of battery cells.

The bent portion may be formed to have an angled cross-section that is downward convex on a lateral surface of a battery cell of the plurality of battery cells.

A connection structure of the first tab may include an eleventh connection welded to the electrode terminals of the one or more battery cells arranged in the first row in two pieces, bent, and extending in a height direction, a twelfth connection extending in a direction that is orthogonal to the first row, and a thirteenth connection extending along a direction of the first row to be connected to the first neck portion.

A connection structure of the second tab may include a twenty first connection welded to the electrode terminals of the one or more battery cells arranged in the second row, bent, and extending in a height direction, a twenty second connection extending in a direction that is orthogonal to the second row, and a twenty third connection extending along a direction of the second row to be connected to the second neck portion.

An embodiment of the present disclosure provides a method of manufacturing a battery module. The method may comprise providing holder for receiving a plurality of battery cells; arranging the plurality of battery cells in the holder in a first row and a second row parallel to the first row; installing a tab member on the holder, positioned relative to the first row and the second row wherein installing the tab member comprises welding the tab member to respective electrode terminals of the plurality of battery cells, and wherein the tab member comprises: a body portion disposed between the first row and the second row, a first neck portion connected to the body portion, disposed along the first row, and connected to electrode terminals of one or more battery cells of the plurality of battery cells arranged in the first row with a first tab, and a second neck portion connected to the body portion, disposed along the second row, and connected to electrode terminals of one or more battery cells of the plurality of battery cells arranged in the second row with a second tab.

A connection structure of the first tab may include an eleventh connection welded to the electrode terminals of the one or more battery cells arranged in the first row in two pieces, bent, and extending in a height direction, a twelfth connection extending in a direction that is orthogonal to the first row, and a thirteenth connection extending along a direction of the first row to be connected to the first neck portion.

A connection structure of the second tab may include a twenty first connection welded to the electrode terminals of the one or more battery cells arranged in the second row, bent, and extending in a height direction, a twenty second connection extending in a direction that is orthogonal to the second row, and a twenty third connection extending along a direction of the second row to be connected to the second neck portion.

An embodiment of the present disclosure provides a tab member for use in a battery module and configured to be disposed on a holder of the battery module and welded to respective electrode terminals of a plurality of battery cells of the battery module. The tab member may comprise a body portion configured to be disposed between first and second rows of the battery cells of the plurality of battery cells; a first neck portion connected to the body portion, configured to be disposed along the first row, and connected to electrode terminals of one or more battery cells of the plurality of battery cells arranged in the first row with a first tab, and a second neck portion connected to the body portion, configured to be disposed along the second row, and connected to electrode terminals of one or more battery cells of the plurality of battery cells arranged in the second row with a second tab.

A connection structure of the first tab may include an eleventh connection welded to the electrode terminals of the one or more battery cells arranged in the first row in two pieces, bent, and extending in a height direction, a twelfth connection extending in a direction that is orthogonal to the first row, and a thirteenth connection extending along a direction of the first row to be connected to the first neck portion.

A connection structure of the second tab may include a twenty first connection welded to the electrode terminals of the one or more battery cells arranged in the second row, bent, and extending in a height direction, a twenty second connection extending in a direction that is orthogonal to the second row, and a twenty third connection extending along a direction of the second row to be connected to the second neck portion.

Regarding the battery module according to an embodiment, the tab member may include the body portion, the first and second neck portions, and the first and second tabs to connect the electrode terminals of the battery cells of the first and second rows, thereby sharing the body portion of the tab member. Therefore, the voltage difference between the battery cells may be minimized. Hence, the reduction of the lifespan of the battery cells may be prevented.

### BRIEF DESCRIPTION OF THE DRAWINGS

FIG. 1 shows an exploded perspective view of a rechargeable battery module according to a first embodiment of the present disclosure.
FIG. 2 shows a top plan view of the rechargeable battery module according to the first embodiment of the present disclosure.
FIG. 3 shows a top plan view of a tab member for connecting four battery cells of the rechargeable battery module of FIG. 2.
FIG. 4 shows a perspective view of a tab member of the rechargeable battery module of FIG. 2.
FIG. 5 shows a cross-sectional view of the tab member of FIG. 3 with respect to a line V-V of FIG. 3.
FIG. 6 shows a top plan view of a tab member for connecting four battery cells in a rechargeable battery module according to a second embodiment of the present disclosure.
FIG. 7 shows a cross-sectional view of the tab member of FIG. 6 with respect to a line VII-VII of FIG. 6.
FIG. 8 shows a cross-sectional view of a rechargeable battery module according to a third embodiment of the present disclosure.
FIG. 9 shows a cross-sectional view of a rechargeable battery module according to a fourth embodiment of the present disclosure.
FIG. 10 shows a cross-sectional view of a rechargeable battery module according to a fifth embodiment of the present disclosure.

### DETAILED DESCRIPTION

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

The rechargeable battery may be used as a rechargeable battery module including a plurality of battery cells connected in series and/or parallel to drive a motor of, for example, a hybrid vehicle requiring relatively high energy density. For example, to implement a relatively high-output rechargeable battery module (e.g., an electric vehicle), the rechargeable battery module may be formed by connecting electrode terminals of the battery cells using a number of battery cells that satisfies a desired electric power amount.

For example, the rechargeable battery module is formed by storing battery cells in a holder and connecting the battery cells in series and/or in parallel with tabs. The rechargeable battery module has a high voltage and current depending on the consumer's usage conditions, so the rechargeable battery module may include tabs that connect the battery cells and a battery management system connected to the tabs.

At this time, the battery cells are connected to one tab so a voltage difference may occur between the battery cells depending on discharge. Voltage differences between the battery cells may deteriorate the lifespan of the battery cells.

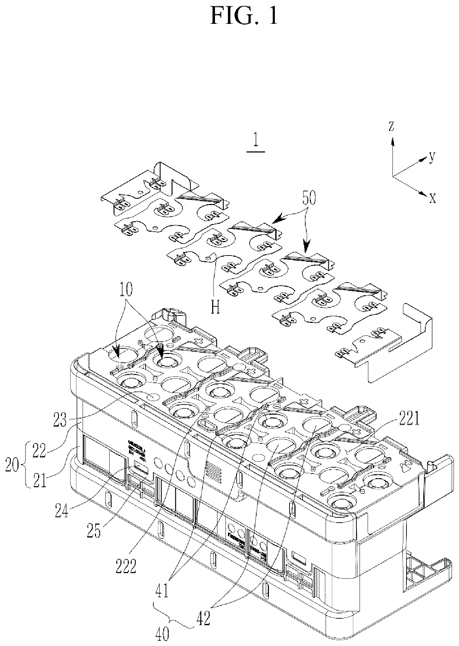

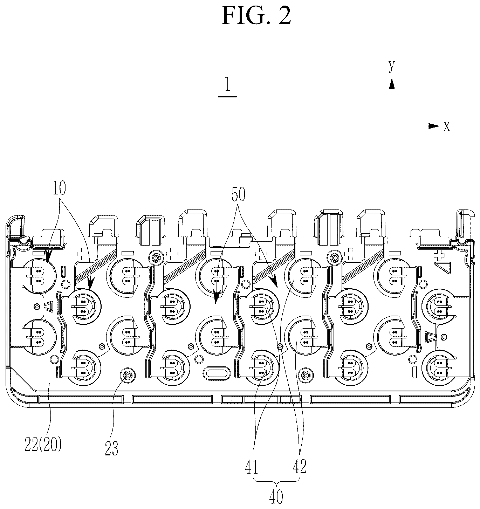

FIG. 1 shows an exploded perspective view of a rechargeable battery module according to a first embodiment of the present disclosure, and FIG. 2 shows a top plan view of a rechargeable battery module according to the first embodiment of the present disclosure. Referring to FIG. 1 and FIG. 2, the rechargeable battery module 1 according to a first embodiment may include battery cells 10, a holder 20 for receiving the battery cells 10, and a tab member 50 welded to electrode terminals 40 of the battery cells 10.

Each of the battery cells 10 may be a cylindrical rechargeable battery, and may include electrode terminals 40 on respective ends of the cylindrical rechargeable battery in an axial direction. That is, the electrode terminal 40 of a battery cell may include a positive terminal 41 and a negative terminal 42 installed at respective ends of the respective battery cells 10 in the axial direction.

The holder 20 may include a bottom holder 21 and a top holder 22. The bottom holder 21 and the top holder 22 may form a honey comb structure therein to receive the battery cells 10 spaced in a first direction (x-axis direction) and a second direction (y-axis direction) crossing the first direction, and may be combined to each other in a third direction (z-axis direction) crossing the second direction and may be firmly fastened by a fastening member 23.

In the state of FIG. 1, the bottom holder 21 may receive lower sides of the battery cells 10, and the top holder 22 may receive upper sides of the battery cells 10. The bottom holder 21 and the top holder 22 are fastened by the fastening member 23.

The bottom holder 21 and the top holder 22 may be further combined in a snap-fit structure comprising a protrusion 24 installed outside the bottom holder 21 and a coupling part 25 installed outside the top holder 22 corresponding to the protrusion 24.

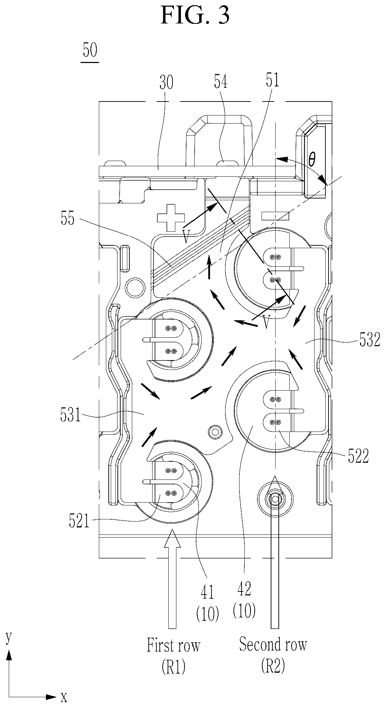

FIG. 3 shows a top plan view of a tab member for connecting four battery cells of the rechargeable battery module of FIG. 2. Referring to FIG. 1, FIG. 2, and FIG. 3, the battery cells 10 may be received in the holder 20 and may be arranged in a first row R1 and a second row R2 in parallel to the first row R1. The first row R1 and the second row R2 may be set in the second direction and may be spaced from each other in the first direction.

For example, the positive terminal 41 of a battery cell may be disposed on an upper portion of the rechargeable battery module, and the negative terminal 42 may be disposed on a lower portion in the first row R1. The positive terminal 41 may be disposed on a lower portion of the rechargeable battery module and the negative terminal 42 may be disposed on an upper portion in the second row R2.

An axial-direction center of the battery cells 10 disposed in the first row R1 and an axial-direction center of the battery cells 10 disposed in the second row R2 are offset along a direction of the first and second rows R1, R2. Therefore, the cylindrical battery cells 10 may be prevented from being adjacent with each other.

That is, relative to the battery cells 10 disposed in the first row R1, the battery cells 10 disposed in the second row R2 may be shifted in the second direction (y-axis direction). Therefore, a line passing through centers of the two battery cells 10 disposed at the ends of the first row R1 and the second row R2 may have an angle (θ) (e.g., other than 90 degrees) from the direction in which the first row R1 and the second row R2 are disposed.

For example, the tab members 50 may comprise a nickel material, and the battery cells 10 may be electrically connected in parallel and/or in series and may be connected to the battery management system (BMS) 30. The tab members 50 may be formed by punching a thin plate material.

For example, the battery management system BMS 30 may be installed on the lateral surfaces of the bottom holder 21 and the top holder 22. The tab members 50 may respectively have an output end 54 on one side of the first direction (x-axis direction), and may be electrically connected to the battery management system BMS 30 through the output ends 54.

The tab members 50 may be disposed in a seating groove 221 of the bottom holder 21 and the top holder 22 and may connect the corresponding electrode terminals 40. A protruding portion 222 may be installed on one side of the seating groove 221 and may engage with a combined hole H that corresponds to the tab member 50.

Therefore, the seating groove 221 may set a position of the tab member 50, before welding the tab member 50 to the electrode terminal 40, to maintain the position of the tab member 50. The protruding portion 222 may engage with the combined hole H, when completing the setting of the position of the tab member 50, to prevent the tab member 50 from being separated from the seating groove 221.

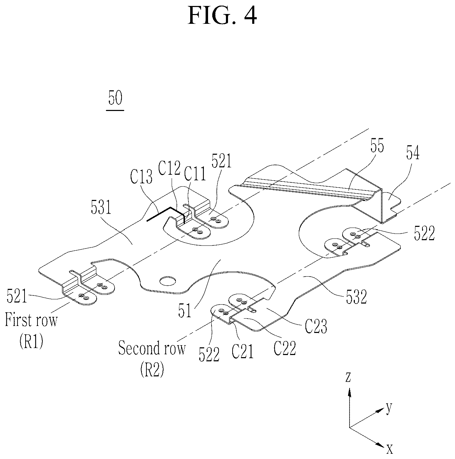

FIG. 4 shows a perspective view of a tab member of FIG. 2. Referring to FIG. 4, the tab member 50 may include a body portion 51, a first tab 521, a second tab 522, a first neck portion 531, and a second neck portion 532.

A connection structure of the first tab 521 may include an eleventh connection C11 configured to be welded to the positive terminal 41 in two pieces, bent, and extending in the height direction (z-axis direction), a twelfth connection C12 extending in a direction that is orthogonal to the first row R1, and a thirteenth connection C13 extending in the direction of the first row R1 to be connected to the first neck portion 531.

A connection structure of the second tab 522 may include a twenty first connection C21 configured to be welded on the negative terminal 42 in two pieces, bent, and extending in the height direction (z-axis direction), a twenty second connection C22 extending in a direction that is orthogonal to the second row R2, and a twenty third connection C23 extending in the direction of the second row R2 to be connected to the second neck portion 532.

The connection structure of the first tab 521 including the eleventh connection C11, the twelfth connection C12, and the thirteenth connection C13 and the connection structure of the second tab 522 including the twenty first connection C21, and twenty second connection C22, and the twenty third connection C23 may be connected to the body portion 51 through a long distance.

Therefore, the difference between an entire distance to a final output end of the tab member 50 through the body portion 51 from the connection structure of the first tab 521 and an entire distance to a final output end of the tab member 50 through the body portion 51 from the connection structure of the second tab 522 may be minimized. That is, the voltage difference between the battery cell of the first row R1 and the battery cell 10 of the second row R2 may be minimized (e.g., equal to zero).

Referring to FIG. 3 and FIG. 4, the body portion 51 may be disposed between the first row R1 and the second row R2 of the battery cells 10 and may be connected in the second direction. The first tab 521 may be connected to the positive terminals 41 in the first row R1. The first tab 521 may be connected to the body portion 51 and may be disposed in the first row R1. The second tab 522 may be connected to the negative terminals 42 in the second row R2. The second tab 522 may be connected to the body portion 51 and may be disposed in the second row R2.

The first neck portion 531 may have a pair of the electrically connected first tabs 521, and may connect the positive terminals 41 of the two battery cells 10 in parallel. The first neck portion 531 may avoid (e.g., be disposed around) the two battery cells 10 disposed in the direction of the first row R1 and may be disposed between the two battery cells 10 in the direction of the first row R1. The one pair of the first tabs 521 may be connected to the first neck portion 531, may avoid the two battery cells 10 disposed in the direction of the first row R1, and may be connected to the respective positive terminals 41 of the two battery cells 10.

The second neck portion 532 may have a pair of electrically connected second tabs 522 and may connect the negative terminals 42 of the two battery cells 10 in parallel. The second neck portion 532 may avoid the two battery cells 10 disposed in the direction of the second row R2 and may be disposed between the two battery cells 10 in the direction of the second row R2. The one pair of the second tabs 522 may be connected to the second neck portion 532, may avoid the two battery cells 10 disposed in the direction of the second row R2, and may be connected to the respective negative terminals 42 of the two battery cells 10.

The first tab 521 and the first neck portion 531 in the first row R1 may generate a same current path of the two battery cells 10 disposed in the first row R1 up to the body portion 51. Therefore, the voltage difference between the battery cells 10 in the first row R1 may be minimized (e.g., equal to zero).

The second tab 522 and the second neck portion 532 in the second row R2 may generate a same current path of the two battery cells 10 disposed in the second row R2 up to the body portion 51. Therefore, the voltage difference between the battery cells 10 in the second row R2 may be minimized (e.g., equal to zero).

The body portion 51 may be connected to the first neck portion 531 and the second neck portion 532 and may connect the two battery cells 10 connected in parallel in the first row R1 and the two battery cells 10 connected in parallel in the second row R2 in series.

Therefore, a current of the two battery cells 10 connected in parallel in the first row R1 may flow to the body portion 51, and a current of the two battery cells 10 connected in parallel in the second row R2 may flow to the body portion 51.

In this instance, the body portion 51 of the tab member 50 may be shared with the first row R1 and the second row R2 so the voltage difference between the battery cells 10 of the first row R1 and the second row R2 may be minimized (e.g., equal to zero). Hence, reduction of lifespan of the battery cells 10 may be prevented.

The tab member 50 may further include a bent portion 55 connected to an end of the body portion 51 disposed between the first row R1 and the second row R2 and formed to have a downward convex cross-section on a lateral surface. The bent portion 55 may increase in a direction of an angle (θ) dislocated on the lateral surfaces of the two battery cells 10.

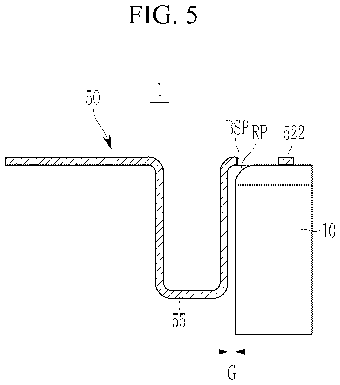

FIG. 5 shows a cross-sectional view with respect to a line V-V of the tab member of FIG. 3. Referring to FIG. 5, the bent portion 55 has a curvature radius, and an upper-end bending start point BSP of the curvature radius may be disposed on a diagonal upper portion of round portions RP formed on respective ends of the battery cell 10 in the axal direction.

The bent portion 55 may be installed in the tab member 50 for connecting the battery management system BMS 30 and the battery cell 10, and may absorb and/or ease impacts or vibration transmittable in respective directions between the battery management system 30 and the battery cell 10.

The bent portion 55 may form a gap G between the BMS 30 and the lateral surface of the battery cell 10. The gap G may increase a degree of freedom of assembling the tab member 50 and may ease setting for welding the battery cell 10 and the tab member 50.

Various embodiments of the present disclosure will now be described. Components and configurations which are the same as the first embodiment and the above-described embodiments will be omitted, and different configurations will now be described.

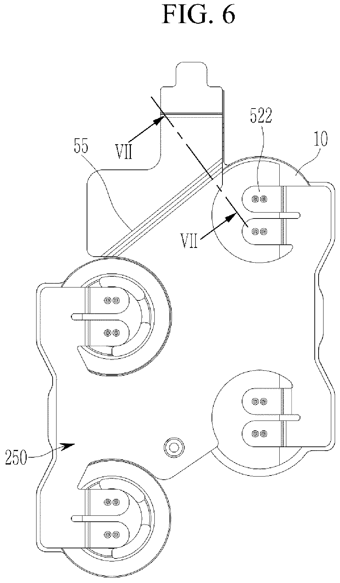

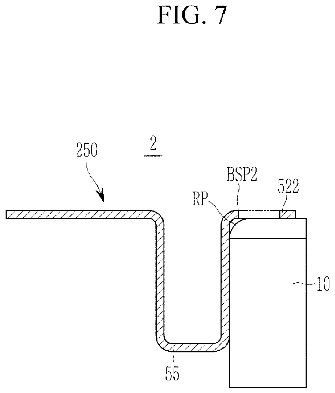

FIG. 6 shows a top plan view on a tab member for connecting four battery cells in a rechargeable battery module according to a second embodiment of the present disclosure, and FIG. 7 shows a cross-sectional view with respect to a line VII-VII of FIG. 6. Referring to FIG. 6 and FIG. 7, regarding the tab member 250 of the rechargeable battery module 2 according to a second embodiment, the bent portion 55 has a curvature radius, and an upper-end bending start point BSP2 of the curvature radius may be disposed on an upper portion of the round portion RP formed on respective ends of the battery cell 10 in the axial direction (top to bottom direction in FIG. 7).

The tab member 250 is connected to the second tab 522 by welding, and may contact the battery cell 10 on the lateral surface of the bent portion 55 to thus make the connection of the tab member 250 and the battery cell 10 firmer. Therefore, the bent portion 55 may be installed in the tab member 250 for connecting the battery management system BMS 30 and the battery cell 10, may be more firmly connected to the battery cell 10 than to the battery management system 30, and may absorb and/or ease the impacts or vibration transmittable in the respective directions.

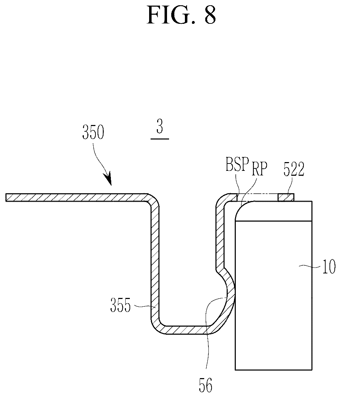

FIG. 8 shows a cross-sectional view of a rechargeable battery module according to a third embodiment of the present disclosure. Referring to FIG. 8, regarding the tab member 350 of the rechargeable battery module 3 according to a third embodiment, the bent portion 355 may have a curvature radius, and the upper-end bending start point BSP of the curvature radius may be disposed on the diagonal upper portion of the round portion RP formed on the respective ends of the battery cell 10 in the axial direction.

The bent portion 355 may be installed in the tab member 350 for connecting the battery management system 30 and the battery cell 10, and may absorb and/or ease the impacts or vibration transmittable in the respective directions between the battery management system 30 and the battery cell 10.

The bent portion 355 may further include a lateral convex surface 56 that is convex toward the lateral surface of the battery cell 10. The lateral convex surface 56 may increase a degree of freedom of assembling the tab member 350, may ease the setting for welding the battery cell 10 and the tab member 350, may contact the battery cell 10, and may make the connection of the tab member 350 and the battery cell 10 firmer.

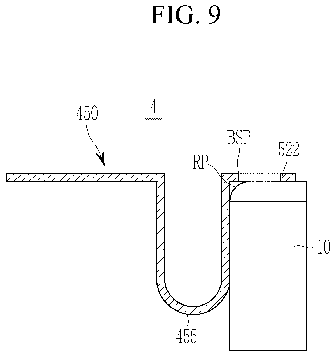

FIG. 9 shows a cross-sectional view of a rechargeable battery module according to a fourth embodiment of the present disclosure. Referring to FIG. 9, regarding the tab member 450 applied to the rechargeable battery module 4 according to a fourth embodiment, the bent portion 455 may be formed to have a curved cross-section that is downward convex on the lateral surface (e.g., convex in a direction downwards, perpendicular to the lateral surface). For example, the curved cross-section may have a U-shape.

The tab member 450 may be connected to the second tab 522 by welding, may contact battery cell 10 on the lateral surface of the bent portion 455 formed to be a curved cross-section, and may make the connection of the tab member 450 and the battery cell 10 firmer. Therefore, the bent portion 455 may be installed in the tab member 450 for connecting the battery management system BMS 30 and the battery cell 10, may be connected more firmly to the battery cell 10 than to the battery management system 30, and may absorb and/or ease the impacts or vibration transmittable in the respective directions.

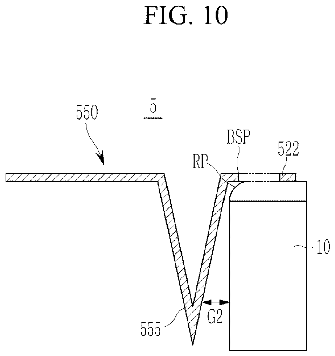

FIG. 10 shows a cross-sectional view of a rechargeable battery module according to a fifth embodiment of the present disclosure. Referring to FIG. 10, regarding the tab member 550 applied to the rechargeable battery module 5 according to a fifth embodiment, the bent portion 555 may be formed to have an angled cross-section that is downward convex on the lateral surface (e.g., convex in a direction downwards, perpendicular to the lateral surface). For example, the angled cross-section may have a V-shape.

The tab member 550 may be connected to the second tab 522 by welding, may contact the battery cell 10 on the lateral surface of the bent portion 555 formed to be an angled cross-section, and may make the connection of the tab member 550 and the battery cell 10 firmer. Therefore, the bent portion 555 may be installed in the tab member 550 for connecting the battery management system BMS 30 and the battery cell 10, may be connected more firmly to the battery cell 10 than to the battery management system BMS 30, and may absorb and/or ease the impacts or vibration transmittable in the respective directions.

A variable gap G2 set between the bent portion 555 and the battery cell 10 may increase the degree of freedom of assembling the tab member 450 to thus ease the setting for welding the battery cell 10 and the tab member 450.

An embodiment of the present disclosure provides a method of manufacturing a rechargeable battery module. The method may comprise providing holder for receiving a plurality of battery cells; arranging the plurality of battery cells in the holder in a first row and a second row parallel to the first row; installing a tab member on the holder, positioned relative to the first row and the second row wherein installing the tab member comprises welding the tab member to respective electrode terminals of the plurality of battery cells, and wherein the tab member comprises: a body portion disposed between the first row and the second row, a first neck portion connected to the body portion, disposed along the first row, and connected to electrode terminals of one or more battery cells of the plurality of battery cells arranged in the first row with a first tab, and a second neck portion connected to the body portion, disposed along the second row, and connected to electrode terminals of one or more battery cells of the plurality of battery cells arranged in the second row with a second tab.

While this disclosure has been described in connection with what is presently considered to be practical exemplary embodiments, it is to be understood that the disclosure is not limited to the disclosed embodiments, but, on the contrary, is intended to cover various modifications and equivalent arrangements included within the scope of the appended claims.

**<Description of symbols>**

| | | | |
|---|---|---|---|
| 1, 2, 3, 4, 5: | rechargeable battery module | 10: | battery cells |
| 20: | holder | 21: | bottom holder |
| 22: | top holder | 23: | fastening member |
| 24: | protrusion | 25: | coupling part |
| 30: | battery management system BMS | 40: | electrode terminal |
| 41: | positive terminal | 42: | negative terminal |
| 50: | tab member | 51: | body portion |
| 54: | output end | 55: | bent portion |
| 56: | lateral convex surface | 221: | seating groove |
| 222: | protruding portion | 250: | tab member |
| 350: | tab member | 355: | bent portion |
| 450: | tab member | 455: | bent portion |
| 521: | first tab | 522: | second tab |
| 531: | first neck portion | 532: | second neck portion |
| 550: | tab member | 555: | bent portion |
| BSP: | bending start point | BSP2: | bending start point |
| C11: | eleventh connection | C12: | twelfth connection |
| C13: | thirteenth connection | C21: | twenty first connection |
| C22: | twenty second connection | C23: | twenty third connection |
| G, G2: | gap | H: | combined hole |
| R1: | first row | R2: | second row |
| RP: | round portion | θ: | angle |

## Claims

1. A battery module (1, 2, 3, 4, 5) comprising:
a plurality of battery cells (10) arranged in a first row and a second row parallel to the first row;
a holder (20) for receiving the plurality of battery cells (10); and
a tab member (50, 250, 350, 450, 550) disposed on the holder (20), positioned relative to the first row and the second row and welded to respective electrode terminals (40) of the plurality of battery cells (10),
wherein the tab member (50, 250, 350, 450, 550) comprises:
a body portion (51) disposed between the first row and the second row,
a first neck portion (531) connected to the body portion (51), disposed along the first row, and connected to electrode terminals (40) of one or more battery cells (10) of the plurality of battery cells (10) arranged in the first row with a first tab (521), and
a second neck portion (532) connected to the body portion (51), disposed along the second row, and connected to electrode terminals (40) of one or more battery cells (10) of the plurality of battery cells (10) arranged in the second row with a second tab (522).

2. The battery module (1, 2, 3, 4, 5) as claimed in claim 1, wherein
the first tab (521) of the first neck portion (531) comprises a pair of electrically connected first tabs (521), and
each tab of the pair of electrically connected first tabs (521) are welded to respective electrode terminals (40) of two battery cells (10) of the plurality of battery cells (10), the two battery cells (10) being disposed in the first row and being electrically connected to each other.

3. The battery module (1, 2, 3, 4, 5) as claimed in claim 2, wherein
the first neck portion (531) is disposed around the two battery cells (10) disposed in the first row and is disposed between the two battery cells (10) disposed in the first row, and
the pair of electrically connected first tabs (521) are disposed around the two battery cells (10) disposed in the first row.

4. The battery module (1, 2, 3, 4, 5) as claimed in claim 2, wherein
the second tab (522) of the second neck portion (532) comprises a pair of electrically connected second tabs (522), and
each tab of the pair of electrically connected second tabs (522) are welded to respective electrode terminals (40) of the two battery cells (10) of the plurality of battery cells (10) which are disposed in the second row and are electrically connected to each other.

5. The battery module (1, 2, 3, 4, 5) as claimed in claim 4, wherein
the second neck portion (532) is disposed around the two battery cells (10) disposed in the second row and is disposed between the two battery cells (10) disposed in the second row, and
the pair of electrically connected second tabs (522) are disposed around the two battery cells (10) disposed in the second row.

6. The battery module (1, 2, 3, 4, 5) as any one of claims 1 to 5, wherein
each of the plurality of battery cells (10) comprise a cylindrical battery,
an axial-direction center of the one or more battery cells (10) arranged in the first row and an axial-direction center of the one or more battery cells (10) arranged in the second row are offset from each other in a direction along the second row such that a line passing through the axial-direction centers of a battery cell (10) disposed at an end of the first row and a battery cell (10) disposed at an end of the second row has angle relative to a direction in which the second row is disposed that is other than 90 degrees.

7. The battery module (1, 2, 3, 4, 5) as claimed in claim 6, wherein
the tab member (50, 250, 350, 450, 550) further comprises
a bent portion (55, 355, 455, 555), the bent portion (55, 355, 455, 555) being bent downwards relative to a plane of the body portion (51) of the tab member (50, 250, 350, 450, 550) and along a direction parallel to the line passing through the axial direction centers of the battery cell (10) disposed at the end of the first row and the battery cell (10) disposed at the end of the second row, the bent portion (55, 355, 455, 555) being connected to an end of the body portion (51) of the tab member (50, 250, 350, 450, 550), and formed to have a cross-section that is downward convex relative to the plane of the body portion (51).

8. The battery module (1, 2, 3, 4, 5) as any one of claims 1 to 7, wherein
the first tab (521) comprises a connection structure comprising:
a connection welded to the electrode terminals (40) of the one or more battery cells (10) arranged in the first row in two pieces, bent, and extending in a height direction,
a connection extending in a direction that is orthogonal to the first row, and
a connection extending along a direction of the first row to be connected to the first neck portion (531).

9. The battery module (1, 2, 3, 4, 5) as any one of claims 1 to 8, wherein
the second tab (522) comprises a connection structure comprising:
a connection welded to the electrode terminals (40) of the one or more battery cells (10) arranged in the second row, bent, and extending in a height direction,
a connection extending in a direction that is orthogonal to the second row, and
a connection extending along a direction of the second row to be connected to the second neck portion (532).

10. A method of manufacturing a battery module (1, 2, 3, 4, 5), the method comprising:
providing holder (20) for receiving a plurality of battery cells (10);
arranging the plurality of battery cells (10) in the holder (20) in a first row and a second row parallel to the first row;
installing a tab member (50, 250, 350, 450, 550) on the holder (20), positioned relative to the first row and the second row wherein installing the tab member (50, 250, 350, 450, 550) comprises welding the tab member (50, 250, 350, 450, 550) to respective electrode terminals (40) of the plurality of battery cells (10), and
wherein the tab member (50, 250, 350, 450, 550) comprises:
a body portion (51) disposed between the first row and the second row,
a first neck portion (531) connected to the body portion (51), disposed along the first row, and connected to electrode terminals (40) of one or more battery cells (10) of the plurality of battery cells (10) arranged in the first row with a first tab (521), and
a second neck portion (532) connected to the body portion (51), disposed along the second row, and connected to electrode terminals (40) of one or more battery cells (10) of the plurality of battery cells (10) arranged in the second row with a second tab (522).

11. The method of claim 10, wherein:
the first tab (521) comprises a connection structure comprising:
a connection welded to the electrode terminals (40) of the one or more battery cells (10) arranged in the first row in two pieces, bent, and extending in a height direction,
a connection extending in a direction that is orthogonal to the first row, and
a connection extending along a direction of the first row to be connected to the first neck portion (531).

12. The method of claim 10 or 11, wherein:
the second tab (522) comprises a connection structure comprising:
a connection welded to the electrode terminals (40) of the one or more battery cells (10) arranged in the second row, bent, and extending in a height direction,
a connection extending in a direction that is orthogonal to the second row, and
a connection extending along a direction of the second row to be connected to the second neck portion (532).

13. A tab member (50, 250, 350, 450, 550) for use in a battery module (1, 2, 3, 4, 5) and configured to be disposed on a holder (20) of the battery module (1, 2, 3, 4, 5) and welded to respective electrode terminals (40) of a plurality of battery cells (10) of the battery module (1, 2, 3, 4, 5), the tab member (50, 250, 350, 450, 550) comprising:
a body portion (51) configured to be disposed between first and second rows of the battery cells (10) of the plurality of battery cells (10);
a first neck portion (531) connected to the body portion (51), configured to be disposed along the first row, and connected to electrode terminals (40) of one or more battery cells (10) of the plurality of battery cells (10) arranged in the first row with a first tab (521), and
a second neck portion (532) connected to the body portion (51), configured to be disposed along the second row, and connected to electrode terminals (40) of one or more battery cells (10) of the plurality of battery cells (10) arranged in the second row with a second tab (522).

14. The tab member (50, 250, 350, 450, 550) of claim 13, wherein:
the first tab (521) comprises a connection structure comprising:
a connection configured to be welded to the electrode terminals (40) of the one or more battery cells (10) arranged in the first row in two pieces, bent, and extending in a height direction,
a connection extending in a direction that is orthogonal to the first row, and
a connection extending along a direction of the first row to be connected to the first neck portion (531); and
the second tab (522) comprises a connection structure comprising:
a connection configured to be welded to the electrode terminals (40) of the one or more battery cells (10) arranged in the second row, bent, and extending in a height direction,
a connection extending in a direction that is orthogonal to the second row, and
a connection extending along a direction of the second row to be connected to the second neck portion (532).

15. A system comprising:
the tab member (50, 250, 350, 450, 550) of claim 14; and
the holder (20).
